# EUROPÄISCHE PATENTSCHRIFT

(11) **EP 0 561 226 B1**
(45) Veröffentlichungstag und Bekanntmachung des Hinweises auf die Patenterteilung: **14.08.1996**
(21) Anmeldenummer: 93103416.9
(22) Anmeldetag: 03.03.1993
(51) Int. Cl.: B32B 27/34

(54) **Mehrschichtfolien aus Copolyamiden**
Composite films made of copolyamides
Feuilles composites en copolyamides

(30) Priorität: 16.03.1992 DE 4208362
(43) Veröffentlichungstag der Anmeldung: 22.09.1993
(73) Patentinhaber: BAYER AG, 51368 Leverkusen (DE)
(72) Erfinder: Nielinger, Werner, Dr., W-4150 Krefeld (DE); Schulte, Helmut, Dipl.-Ing., W-4150 Krefeld (DE); Schulte, Bernhard, Dr., W-4150 Krefeld (DE); Ostlinning, Edgar, Dr., W-4000 Düsseldorf (DE)

(56) Entgegenhaltungen:
- EP-A- 0 104 436
- EP-A- 0 335 014
- EP-A- 0 458 470
- DATABASE WPIL Derwent Publications Ltd., London, GB;

## Beschreibung

Die Erfindung betrifft transparente Mehrschichtfolien aus Polyamiden und Polyolefinen unter Verwendung von Copolyamiden aus ε-Caprolactam in Verbindung mit Diaminen und Dicarbonsäuren bevorzugt mit Hexamethylendiamin und Isophthalsäure.

Mehrschichtfolien aus Polyamiden und Polyolefinen zeichnen sich durch eine Vielzahl vorteilhafter Eigenschaften aus wie hohe Zähigkeit, Siegelfähigkeit, geringe Durchlässigkeit für Wasserdampf, Sauerstoff, Kohlendioxid, Fette und Aromastoffe. Daher werden sie bevorzugt zur Verpackung von Lebensmitteln eingesetzt, nicht zuletzt auch wegen ihrer hohen Transparenz und ihrer Bedruckbarkeit, wohingegen Monofolien aus Polyamiden oder Polyethylen viele dieser Eigenschaften nicht aufweisen. Selbstverständlich muß auch eine problemlose Herstellbarkeit der Folien und eine einfache Verarbeitbarkeit der Folien selbst gewährleistet sein.

Verbundfolien können durch Beschichten, Kaschieren oder durch Coextrusion hergestellt werden. Für die Blascoextrusion kommen als Polyamidkomponente vor allem Copolyamide in Betracht, da Homopolyamide keine ausreichend transparenten Folien ergeben. Andererseits nimmt bei Folien aus teilkristallinen Polyamiden die Gasdurchlässigkeit mit abnehmender Kristallinität zu, so daß Folien aus Copolyamiden wegen ihrer geringeren Kristallinität ein schlechteres Barriereverhalten haben. Beispielsweise beträgt der Permeationswert für Sauerstoff, gemessen an einer 25 µm starken Folie aus Polyamid 6, 45 bzw. 60 cm³ · 25 µm/m² · d · bar. Ein Copolyamid aus Polyamid 6 und etwa 6 % Polyamideinheiten aus Isophorondiamin und Isophthalsäure hat einen Permeationswert von 60 bzw. 75 cm³ · 25 µm/m² · d · bar (Trockenklima bzw. Feuchtklima).

Vollständig amorphe Polyamide aus Isophthalsäure und Hexamethylendiamin oder Copolyamide mit Terephthalsäure haben im Trockenklima ähnliche Permeationswerte für Sauerstoff wie Polyamid 6, die starke Zunahme der Permeationswerte für feuchte Gase, wie sie bei Polyamid 6 beobachtet wird, wird bei diesen amorphen Polyamiden nicht gefunden. Folien aus den amorphen Polyamiden haben optisch ansprechende Eigenschaften wie hohe Transparenz und Glanz, sie sind jedoch wegen ihres hohen E-Moduls aber für die Verpackung von Lebensmitteln zu steif, schmiegen sich bei Vakuumverpackungen nicht so glatt an das Füllgut an und neigen zur Bildung von Knickbrüchen oder auch Rissen. Deshalb werden sie vorzugsweise zur Herstellung von Hohlkörpern nach dem Blascoextrusionsverfahren verwendet.

Die Herstellung von Copolyamiden aus ε-Caprolactam, Hexamethylendiamin und Isophthalsäure ist aus DE 1 669 476 bekannt. Die Verwendung derartiger Copolyamide, die aus 70 bis 95 Gew.-% ε-Caprolactam und 5 bis 30 Gew.-% Hexamethylendiaminisophthalat und/oder Hexamethylendiaminterephthalat bestehen, zur Herstellung von schrumpffähigen Folien nach biaxialem Verstrecken ist in den japanischen Patentschriften 62 227-626 und 63 214-445 beschrieben. Diese Produkte besitzen nicht alle die gewünschte Eigenschaftskombination aus Transparenz, Glanz, Gasdurchlässigkeit und Verarbeitungsverhalten.

Es wurde nunmehr gefunden, daß Copolyamide des ε-Caprolactams mit einem bestimmten Rekristallisationsverhalten beim Abkühlen der Schmelze zu Folien mit der gewünschten, optimalen Eigenschaftskombination führen. Die Kristallisationsenthalpie der auf 260°C erhitzten Probe des Copolyamids soll, bestimmt durch Differentialthermoanalyse, beim Abkühlen mit einer Kühlrate von 40 K/min, 2 bis 10, bevorzugt 4 bis 8 J/g betragen. Gegenstand der Erfindung sind transparente Mehrschichtfolien aus Polyolefinen oder Polyethylencopolymere, bevorzugt Polyethylene und Polyamiden, dadurch gekennzeichnet, daß wenigstens eine Schicht aus einem Copolyamid aus 80 bis 95 Gew.-% Einheiten des ε-Caprolactams und 5 bis 20 Gew.-% äquimolare Mengen von Einheiten eines Diamins und einer Dicarbonsäure besteht, welche eine beim Abkühlen der Copolyamidschmelze mit einer Kühlrate von 40 K/min durch Differentialthermoanalyse bestimmte Kristallisationsenthalpie von 2 bis 10 J/g aufweist.

Geeignete Copolyamide sind solche aus ε-Caprolactam mit Diaminen und Dicarbonsäuren, beispielsweise Hexamethylendiamin, Trimethylhexamethylendiamin, Isophorondiamin, Bis-(4-aminocyclohexyl)-methan, 3,3'-Dimethyl-4,4'-diaminodicyclohexylmethan, Xylylendiamin und Adipinsäure, Sebacinsäure, Azelainsäure, Decandicarbonsäure, Isophthalsäure, Terephthalsäure. Besonders bevorzugt sind Copolyamide aus 83 bis 89, vorzugsweise 84 bis 87 Gew.-% Einheiten des ε-Caprolactam und 11 bis 17, vorzugsweise 13 bis 16 Gew.-% an äquimolaren Mengen von Einheiten aus Hexamethylendiamin und Isophthalsäure.

Bevorzugte Polyethylencopolymere sind Copolymere aus Ethylen und (Meth)acrylsäure oder Ethylen und Vinylacetat oder verseiftem Vinylacetat.

Folien aus diesen Copolyamiden zeichnen sich durch hohe Transparenz und Glanz aus. Sie zeigen, verglichen mit Folien aus Copolyamiden mit einer Kristallisationsenthalpie von mehr als 10 J/g, beispielsweise Copolyamiden aus ε-Caprolactam, Isophorondiamin und Isophthalsäure, trotz der geringen Kristallisationsgeschwindigkeit einen niedrigen Sauerstoffpermeationswert, der insbesondere nur geringfügig vom Feuchtegehalt des Gases abhängig ist. Dies ermöglicht eine problemlose, von Klimaschwankungen unbeeinflußte Lagerung des verpackten Gutes. Die Folien zeichnen sich darüber hinaus durch hohe Transparenz und hohen Glanz aus.

Wegen des niedrigen Schmelzpunktes der erfindungsgemäßen Copolyamide ist es möglich, sie mit thermisch empfindlichen Polymeren wie Ethylenvinylacetatcopolymer (E/VA) und wie Ethylenvinylalkoholcopolymer (E/Val) nach dem Blascoextrusionsverfahren zu verarbeiten. Sie haben im Vergleich zu anderen bekannten Copolyamiden eine geringere Durchlässigkeit für Sauerstoff, die durch Feuchtigkeit nur wenig beeinflußt wird.

Die Herstellung der Copolyamide erfolgt diskontinuierlich oder kontinuierlich mit einer Verweilzeit der Reaktionsmischung von mehr als 15 Stunden bei einer Temperatur von > 220°C nach bekannten Verfahren, z.B. durch Polymerisation von ε-Caprolactam, Hexamethylendiamin und Isophthalsäure, wobei Hexamethylendiamin und Isophthalsäure bevorzugt als wäßrige Salzlösung eingesetzt werden. Das bevorzugte Verfahren ist die kontinuierliche Herstellungsweise, da vor allem mit diesem Verfahren Copolyamide mit dem gewünschten Kristallisationsverhalten bei einer gleichbleibenden Produktqualität erhalten werden.

Die Folien werden in bekannter Weise durch Extrusion oder Coextrusion, insbesondere nach dem Blasverfahren, hergestellt. Bei der Extrusion der Mehrschichtfolien werden die handelsüblichen Haftvermittler eingesetzt.

Die erfindungsgemäßen Copolyamide werden insbesondere in Kombination mit weiteren Barrierestoffen zu Mehrschichtfolien verarbeitet, die zur Verpackung von Lebensmitteln dienen, und die aufgrund des Ausschlusses von Sauerstoff eine verlängerte Haltbarkeitsdauer des verpackten Gutes ermöglichen.

### Beispiele

### Beispiel 1

Ein Copolyamid aus 85 Teilen Polyamid 6 und 15 Teilen des Polyamids aus Isophthalsäure und Hexamethylendiamin wird auf einem Reifenhäuser-Extruder mit einem Schneckendurchmesser von 60 mm zu Folien extrudiert. Die Herstellung des Copolyamids erfolgte kontinuierlich, die Kristallisationsenthalpie beim Abkühlen mit einer Kühlrate von 40 K/min. war 5,4 J/g, die Schmelzenthalpie 36 J/g. Die Verarbeitung erfolgte bei einer Massetemperatur von 220°C, die Temperatur der Kühlwalze war 90°C.

Permeationswert [cm³ · 25 µm/m² · d · bar] von Sauerstoff bei einer Foliendicke von 25 µm:

| | |
|---|---|
| Bei 0 % rel. Feuchte: | 47 |
| Bei 80 % rel. Feuchte: | 51 |
| Trübung gemessen nach ASTM D 103-61: | 1 % |

### Beispiel 2

Auf einer 5-Schicht-Blasfolienanlage der Firma Barmag wurde eine Blasfolie aus dem Copolyamid nach Beispiel 1, E/Val und einem Polyethylen niedriger Dichte hergestellt. Die beiden Haftvermittler-Schichten bestanden aus MSA-gepfropftem Polyethylen. Bei einer Massetemperatur des Copolyamids von 215 bis 220°C konnte die Folie problemlos ohne Schädigung des E/VAL hergestellt werden.

Schichtenfolge: Polyethylen (14 µm), Haftvermittler (4 µm MSA gepfropftes PE, Typ Plexar® PLXOHOO2; Fa. DSM), Ethylenvinylalkoholcopolymer (8 µm Typ EP-E 105 A; Fa. Kuraray), Haftvermittler (6 µm s.o.), Copolyamid entsprechend Bsp 1. (14 µm)

| | rel. Feuchtegehalt | |
|---|---|---|
| | 0 % | 80 % |
| Gasdurchgang (cm³/m²d·bar) | 4 | 6 |

### Beispiel 3 (Vergleichsbeispiel)

Ein diskontinuierlich hergestelltes Copolyamid, bestehend aus 90 Teilen Polyamid 6 und 10 Teilen Poly(hexamethylenisophthalamid) wird, wie in Beispiel 1 beschrieben, zu einer Flachfolie mit einer Dicke von 25 µm verarbeitet. Die Kristallisationsenthalpie beim Abkühlen beträgt 37,5 J/g, die Schmelzenthalpie 36,7 J/g.

Die Trübung ist 2,1 %.
Permeationswert von Sauerstoff bei einer Foliendicke von 25 µm

| | |
|---|---|
| Bei 0 % rel. Feuchte: | 48 |
| Bei 80 % rel. Feuchte: | 59 |

### Beispiel 4 (Vergleichsbeispiel)

Wie in Beispiel 1 beschrieben, wurde aus einem Copolyamid, bestehend aus 94 Teilen Polyamid 6 und 6 Teilen eines Polyamids aus Isophorondiamin und Isophthalsäure eine Folie hergestellt. Die Massetemperatur betrug 240°C, die Kristallisationsenthalpie beim Abkühlen des Copolyamids war 34 J/g, die Schmelzenthalpie 45 J/g.

Trübung: 4,1 %
Permeationswert von Sauerstoff bei einer Foliendicke von 25 µm

| | |
|---|---|
| Bei 0 % rel. Feuchte: | 60 |
| bei 80 % rel. Feuchte: | 75 |

## Patentansprüche

1. Transparente Mehrschichtfolien aus Polyolefinen und Polyamiden, dadurch gekennzeichnet, daß wenigstens eine Schicht aus einem Copolyamid aus 80 bis 95 Gew.-% Einheiten des ε-Caprolactams und 5 bis 20 Gew.-% äquimolaren Mengen von Einheiten eines Diamins und einer Dicarbonsäure besteht, welches eine beim Abkühlen der Copolyamidschmelze mit einer Kühlrate von 40 K/min durch Differentialthermoanalyse bestimmte Kristallisationsenthalpie von 2 bis 10 J/g aufweist.

2. Transparente Mehrschichtfolien gemäß Anspruch 1, dadurch gekennzeichnet, daß das Copolymerisat auf 83 bis 89 Gew.%-Einheiten des ε-Caprolactams und 11 bis 17 Gew.-% äquimolaren Mengen von Einheiten aus Hexamethylendiamin und Isophthalsäure besteht.

3. Transparente Mehrschichtfolien gemäß Anspruch 1 oder 2, dadurch gekennzeichnet, daß das Copolyamid kontinuierlich mit einer Verweilzeit der Reaktionsmischung von mehr als 15 Stunden bei einer Temperatur von größer als 220°C hergestellt wird.

4. Mehrschichtfolien gemäß Anspruch 2, dadurch gekennzeichnet, daß das Copolyamid 84 bis 87 Gew.-% Einheiten des ε-Caprolactams und 13 bis 16 Gew.-% äquimolare Mengen von Einheiten aus Hexamethylendiamin und Isophthalsäure enthält.

5. Mehrschichtfolien gemäß den Ansprüchen 1 bis 3, dadurch gekennzeichnet, daß als Polyolefine Polyethylen, oder Copolymere aus Ethylen und (Meth)acrylsäure oder Ethylen und Vinylacetat oder verseiftem Vinylacetat verwendet werden.

6. Transparente Mehrschichtfolien gemäß Anspruch 1, dadurch gekennzeichnet, daß das Copolyamid eine Kristallisationsenthalpie von 4 bis 8 J/g aufweist.

## Claims

1. Transparent multilayer films made from polyolefins and polyamides, characterised in that at least one layer consists of a copolyamide prepared from 80 to 95 wt.% of units of ε-caprolactam and from 5 to 20 wt.% of equimolar quantities of units of a diamine and a dicarboxylic acid, which copolyamide has a crystallisation enthalpy, determined by differential thermal analysis, of 2 to 10 J/g when the copolyamide melt is cooled at a rate of 40 K/min.

2. Transparent multilayer films according to claim 1, characterised in that the copolymer consists of 83 to 89 wt.% of units of ε-caprolactam and 11 to 17 wt.% of equimolar quantities of units of hexamethylenediamine and isophthalic acid.

3. Transparent multilayer films according to claim 1 or 2, characterised in that the copolyamide is produced continuously with a residence time of the reaction mixture of more than 15 hours at a temperature of above 220°C.

4. Multilayer films according to claim 2, characterised in that the copolyamide contains 84 to 87 wt.% of units of ε-caprolactam and 13 to 16 wt.% of equimolar quantities of units prepared from hexamethylenediamine and isophthalic acid.

5. Multilayer films according to claims 1 to 3, characterised in that the polyolefins used are polyethylene, or copolymers prepared from ethylene and (meth)acrylic acid or ethylene and vinyl acetate or saponified vinyl acetate.

6. Transparent multilayer films according to claim 1, characterised in that the copolyamide has a crystallisation enthalpy of 4 to 8 J/g.

## Revendications

1. Films multicouche transparents en polyoléfines et polyamides, caractérisés en ce qu'au moins une couche est en copolyamide de 80 à 95 % en poids d'unités de l'ε-caprolactame et 5 à 20% en poids de quantités équimolaires d'unités d'une diamine et d'un acide dicarboxylique, qui présente une enthalpie de cristallisation de 2 à 10 J/g mesurée lors du refroidissement de la masse fondue de copolyamide avec une vitesse de refroidissement de 40 K/min par thermoanalyse différentielle.

2. Films multicouche transparents selon la revendication 1, caractérisés en ce que le copolymère est constitué de 83 à 89 % en poids d'unités de l'ε-caprolactame et 11 à 17 % en poids de quantités équimolaires d'unités d'hexaméthylènediamine et d'acide isophtalique.

3. Films multicouche transparents selon la revendication 1 ou 2, caractérisés en ce qu'on produit le copolyamide en continu avec un temps de séjour du mélange réactionnel supérieur à 15 h à une température supérieure à 220°C.

4. Films multicouche selon la revendication 2, caractérisés en ce que le copolyamide contient 84 à 87 % en poids d'unités de l'ε-caprolactame et 13 à 16 % en poids de quantités équimolaires d'unités d'hexaméthylènediamine et d'acide isophtalique.

5. Films multicouche selon les revendications 1 à 3, caractérisés en ce qu'on utilise comme polyoléfines du polyéthylène, ou des copolymères d'éthylène et d'acide (méth)acrylique ou d'éthylène et d'acétate de vinyle ou d'acétate de vinyle saponifié.

6. Films multicouche transparents selon la revendication 1, caractérisés en ce que le copolyamide présente une enthalpie de crisallisation de 4 à 8 J/g.
